# EUROPEAN PATENT SPECIFICATION

(11) **EP 3 717 280 B1**
(45) Date of publication and mention of the grant of the patent: **07.09.2022**
(21) Application number: 18819477.3
(22) Date of filing: 30.11.2018
(51) Int. Cl.: B60C 11/00, B60C 11/12

(54) **TREAD FOR A TIRE FOR LONG LASTING PERFORMANCE**
LAUFFLÄCHE FÜR EINEN REIFEN FÜR EINE DAUERHAFTE PERFORMANCE
BANDE DE ROULEMENT POUR PNEU POUR UNE DURABILITÉ À LONG TERME

(30) Priority: 30.11.2017 WO PCT/JP2017/042960
(43) Date of publication of application: 07.10.2020
(73) Proprietor: Compagnie Générale des Etablissements Michelin, 63000 Clermont-Ferrand (FR)
(72) Inventor: UCHIDA, Tomotake, Tokyo 163-1073 (JP); SAKURADA, Tomoya, Tokyo 163-1073 (JP)
(74) Representative: Regimbeau
(86) International application number: PCT/JP2018/044107
(87) International publication number: WO 2019/107527

(56) References cited:
- EP-A1- 2 857 225
- JP-A- 2002 079 807
- US-B1- 6 336 486

## Description

### [Technical Field]

The present invention relates to a tread for a tire, in particular to a tread for a tire possible to maintain high level performance on wintry (or white) road and on normal (or black) road until close to end of wear life.

### [Background Art]

In recent years to a tire so-called "studless" tire which is suitable for driving on ice covered and/or snow covered wintry (or white) road, or to a tire so-called "winter" tire or "all-season" tire which has capability to drive on wintry (or white) road for example snow covered road while maintaining high speed driving capability on normal (or black) road, there is a desire to increase performance on normal (or black) road that is not covered by ice nor snow while still improving performance on wintry (or white) road. Also there is a desire to maintain such performance until close to end of wear life.

In order to maintain performance on wintry (or white) road especially snow performance longer, it is known to decrease a stiffness of a tread in a region close to a bottom of a groove is effective. It is also known that such the way impacts negatively performance on normal (or black) road.

EP0378090 discloses a tread for a tire having a block (an element in relief) provided with incisions whose cross-section having a fork-shaped outline with at least two branches forming an extension of a single part, a number of incisions in the block (the element in relief) being multiplied by a factor equal to at least 1.5 starting from a depth of the double-branched incision.

JP2006-142843 discloses a tire having a block consisting of a cap rubber layer and a base rubber layer superposed in radial orientation, the cap rubber layer includes alumina-containing cylindrical shaped closed cell foams and the base rubber layer includes spherical shaped closed cell foams.

JP2002-079807 discloses a tire having a tread formed by at least two layers consisting of a cap rubber layer and a base rubber layer, the base rubber layer includes hollow particles having a mean particle diameter of at most equal to 500 µm mixed in a volume ratio of 2% to 40%. US6336486B1 discloses a pneumatic radial tire comprises a tread portion having a two-layer structure of a cap rubber layer disposed outward in the radial direction and a base rubber layer disposed inward in the radial direction, in which an outer surface of said base rubber layer in the radial direction being existent in a position corresponding to not less than 20% of a depth of a main groove formed in the tread portion outward from a bottom of the main groove in the radial direction, and the base rubber layer being compounded with a recrosslinking inhibition assistant and/or an inorganic compound powder. EP2857225A1 discloses a tire provided with a plurality of circumferential main grooves extending in the tire circumferential direction and a plurality of land sections partitioned by the circumferential main grooves. The land sections are provided with a plurality of auxiliary sipes. In a plan view of a tread, the auxiliary sipes have a bent shape formed by connecting first bent sections and second bent sections. A groove depth (Dg) of the circumferential main grooves and a sipe depth (Ds_1) of the first bent sections and a sipe depth (Ds_2) of the second bent sections of the auxiliary sipes have the relationships of 0.5<_Ds_1/Dg<_ 1.0 and 0.2<_Ds_2/Ds_1 <_0.5.

However, with the above arrangement, bottom portion of a tread (or a block) consisting of double-branched incision, spherical shaped closed cell foam or hollow particles is too soft due to increased number of incisions, closed cell foam or hollow particles impacts negatively from the beginning of tire life. Therefore, it is difficult to maintain satisfactory normal (or black) road performance simultaneously with satisfactory wintry (or white) road performance until close to end of wear life.

### [Citation List]

### [Patent Literature]

[PTL 1]
   EP0378090
[PTL 2]
   JP2006-142843
[PTL 3]
   JP2002-079807
[PTL 4]
   US6336486
[PTL 5]
   EP2857225

Therefore, there is a need for a tread for a tire which maintains wintry (or white) road performance simultaneously with satisfactory normal (or black) road performance until close to end of wear life.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

A "sipe", also referred to as an "incision", is a narrow cutout formed toward radially inwardly from a surface of a tread made by, for example a thin blade having a shape like a knife blade. A width of the incision at the surface of the tread is narrower than a groove, for example less than or equal to 2.0mm. This incision may, different from the groove, be partly or completely closed when such the incision is in a contact patch and under usual rolling condition.

A "solid particles" is particles contain no hollow nor void inside. The solid particles may be metal, mineral, ceramics, organic solid such as wood or polymer, composite material, biomaterial or mixture of these materials.

A "crumb rubber particles" is particles obtained by reducing scrap tire(s) or other rubber(s) into granules with reinforcing materials such as steel(s) or fiber(s) removed along with any other contaminants such as dust(s), glass(es), or rock(s). "Rubber Chemistry and Technology" discloses many methods of grinding vulcanized or crosslinked rubber(s) into crumb rubber particles. For example, the crumb rubber particles may be ground using a mechanical grinding process or a cryogenic process. In both processes the steel components are removed using a magnetic separator and the fiber components are separated by air classifiers or other separation equipment. The mechanical grinding process uses a variety of grinding techniques, such as cracker mills, granulators, etc. to mechanically break down the rubber into small particles. In the cryogenic process, shredded rubber is frozen at an extremely low temperature then shattered into small particles.

It is thus an object of the invention to provide a tread for a tire, such the tread can provide maintenance of wintry (or white) road performance simultaneously with satisfactory normal (or black) road performance until close to end of wear life.

### [Summary of Invention]

The present invention provides a tread for a tire as defined in claim 1.

This arrangement provides maintenance of wintry (or white) road performance simultaneously with satisfactory normal (or black) road performance until close to end of wear life

Since the incision density DLN when the tread being new being greater than or equal to the incision density DLU when the tread being worn to a predetermined remaining tread depth between 1.5 mm smaller than the depth D of the grooves and a level above a tread wear indicator and the incision density DLN is greater than the incision density DLU at a level of the tread wear indicator, it is possible to increase a stiffness of the contact element after certain level of wear. Therefore it is possible to maintain satisfactory normal (or black) road performance until close to end of wear life. This increase of the stiffness of the contact element by lowered incision density DLU would effectively express an advantageous effect of the solid particles for maintaining wintry (or white) road performance (to be explained later) until close to end of wear life.

Since the tread comprising at least two rubber layers laminated in radial orientation of the tire and a rubber composition constituting the base rubber layer comprises solid particles, and the cap rubber layer is devoid of said solid particles, the solid particles would create roughness on the worn top face of the contact element by fall out and/or wear of the solid particles for trapping snow particles and/or for evacuating water film generated between ice covered ground and the contact element. Also at the same time such the roughness would increase edges in micro scale to be able to scrape snow and/or ice covered ground. Therefore it is possible to maintain satisfactory wintry (or white) road performance until close to end of wear life. Also since the particles comprised in the base rubber layer are solid particles, the particles would not be crashed during mixing of the rubber composition and does not impact negatively the stiffness of the contact element. Therefore it is possible to maintain satisfactory normal (or black) road performance until close to end of wear life without decreasing productivity of the tread.

Since the base rubber layer being visible on the worn top face when the tread being worn to the predetermined remaining tread depth on more than or equal to 20% area of the worn top face, it is possible to effectively use the roughness created on the worn top face of the contact element by fall out and/or wear of the solid particles for trapping snow particles and/or for evacuating water film generated between ice covered ground and the contact element. Also at the same time such the roughness would increase edges in micro scale to be able to scrape snow and/or ice covered ground. Therefore it is possible to maintain satisfactory wintry (or white) road performance until close to end of wear life.

In another preferred embodiment, the tread comprises two rubber layers, the cap rubber layer and the base rubber layer laminated in radial orientation of the tire.

According to this arrangement, it is possible to maintain a productivity of the tread as such the construction is common for use with studless tires.

In another preferred embodiment, the incision density DLN is at least 5% greater than the incision density DLU.

If the incision density DLN is greater than the incision density DLU but a gap between two incision densities is less than 5%, there is a risk that an initial normal (or black) road performance would not be satisfactory. By setting the incision density DLN is at least 5% greater than the incision density DLU, it is possible to maintain satisfactory normal (or black) road performance from the beginning until close to end of wear life.

The incision density DLN is preferably at least 7% greater than the incision density DLU, more preferably at least 10% greater than the incision density DLU and still more preferably at least 12% greater than the incision density DLU.

In another preferred embodiment, the predetermined remaining tread depth is between 70% of the depth D of the grooves and the level of the tread wear indicator, and the incision density DLN is greater than the incision density DLU at the predetermined remaining tread depth.

According to this arrangement, it is possible to maintain satisfactory wintry (or white) road performance simultaneously with satisfactory normal (or black) road performance until close to end of wear life.

In another preferred embodiment, a size of the solid particles is from 0.1 mm to 2.0 mm.

If this size of the solid particles is less than 0.1 mm, there is a risk that a roughness created via the solid particles is too small thus wintry (or white) road performance cannot be improved. If this size of the solid particles is more than 2.0 mm, there is a risk that a roughness created via the solid particles is too large thus normal (or black) road performance would be degraded. By setting this size of the solid particles from 0.1 mm to 2.0 mm, it is possible to maintain wintry (or white) road performance simultaneously with satisfactory normal (or black) road performance until close to end of wear life.

This size of the solid particles is preferably from 0.1 mm to 1.8 mm, more preferably from 0.2 mm to 1.5 mm, still more preferably from 0.2 to 1.2 mm and particularly from 0.2 to 1.0 mm.

In another preferred embodiment, an amount of the solid particles in the base rubber layer is from 3 to 40 volume %.

If this amount of the solid particles in the base rubber layer is less than 3 volume %, there is a risk that a roughness created after wear would be not enough thus wintry (or white) road performance cannot be improved. If this amount of the solid particles in the base rubber layer is more than 40 volume %, there is a risk that a roughness created after wear decreases too much contact area thus normal (or black) road performance would be degraded. By setting this amount of the solid particles in the base rubber layer from 3 to 40 volume %, it is possible to maintain wintry (or white) road performance simultaneously with satisfactory normal (or black) road performance until close to end of wear life.

This amount of the solid particles in the base rubber layer is preferably from 5 to 30 volume %, more preferably from 5 to 25 volume % and still more preferably from 8 to 20 volume %.

According to the invention, the solid particles are crumb rubber particles.

According to this arrangement, it is possible to sustain the advantageous effect of solid particles longer as crumb rubber particles adhere with rubber composition constituting the base rubber layer better than the other solid particles thus difficult to fall off, and eventhough crumb rubber particles wear faster than the rubber composition constituting the base rubber layer, crumb rubber particles wear gradually compared with the other solid particles. Thus it is possible to maintain wintry (or white) road performance simultaneously with satisfactory normal (or black) road performance until close to end of wear life.

### [Advantageous Effects of Invention]

According to the arrangements described above, it is possible to provide a tread for a tire, such the tread can provide maintenance of wintry (or white) road performance simultaneously with satisfactory normal (or black) road performance until close to end of wear life.

### [Brief Description of Drawings]

Other characteristics and advantages of the invention arise from the description made hereafter in reference to the annexed drawings which show, as nonrestrictive examples, the embodiment of the invention

In these drawings:
[Fig. 1]

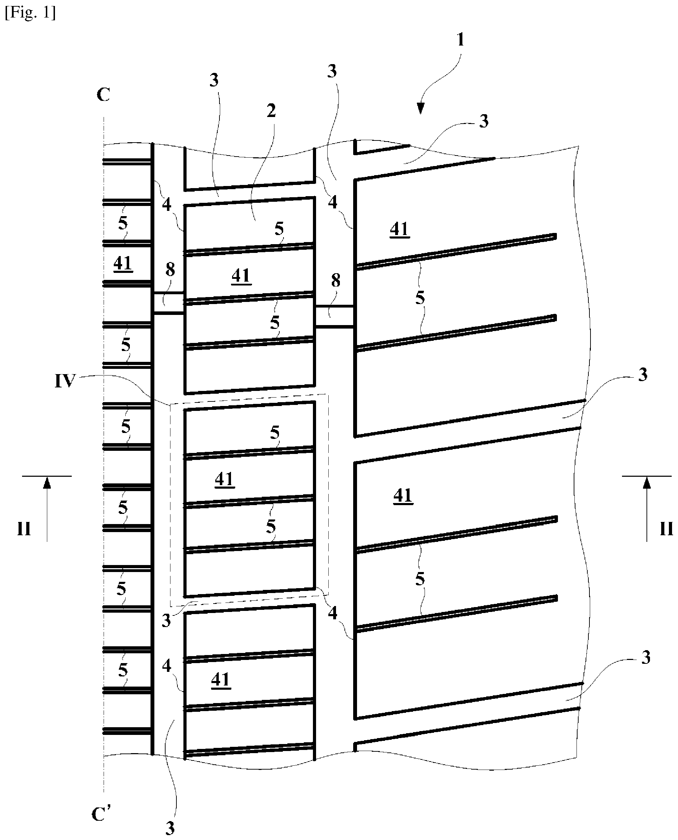

   Fig. 1 is a schematic view of a portion of a tread for a tire according to an embodiment of the present invention;
[Fig. 2]

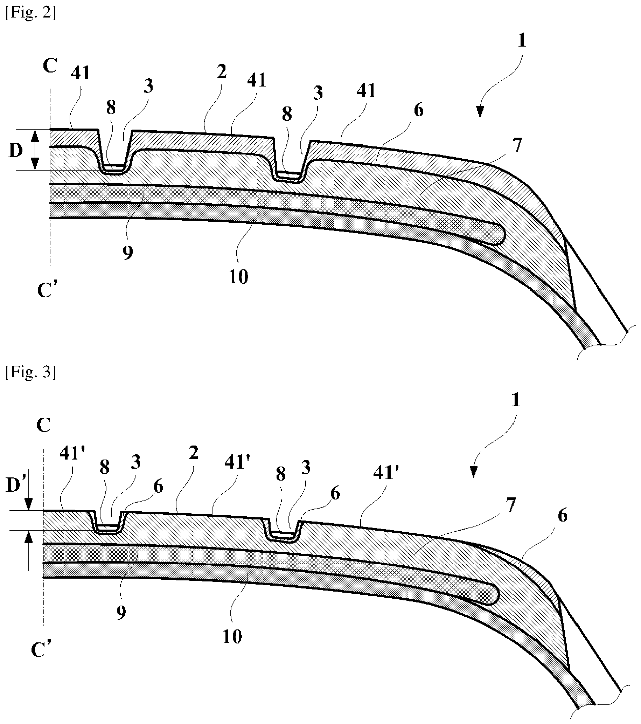

   Fig. 2 is a schematic cross sectional view taken along line II-II in Fig. 1 at a brand new state;
[Fig. 3]
   Fig. 3 is a schematic cross sectional view taken along line II-II in Fig. 1 at a worn state;
[Fig. 4]

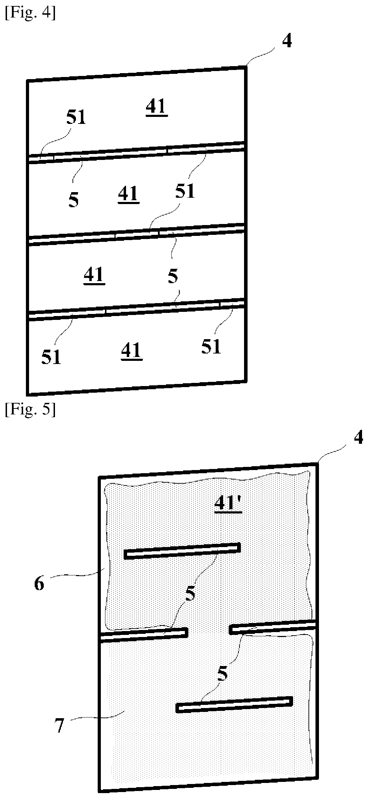

   Fig. 4 is an enlarged schematic view showing a portion indicated as IV in Fig. 1 at a brand new state;
[Fig. 5]
   Fig. 5 is an enlarged schematic view showing a portion indicated as IV in Fig. 1 at a worn state;

### [Description of Embodiments]

Preferred embodiments of the present invention will be described below referring to the drawings.

A tread 1 for a tire according to an embodiment of the present invention will be described referring to Figs. 1 to 5.

Fig. 1 is a schematic view of a portion of a tread for a tire according to an embodiment of the present invention. Fig. 2 is a schematic cross sectional view taken along line II-II in Fig. 1 at a brand new state. Fig. 3 is a schematic cross sectional view taken along line II-II in Fig. 1 at a worn state. Fig. 4 is an enlarged schematic view showing a portion indicated as IV in Fig. 1 at a brand new state. Fig. 5 is an enlarged schematic view showing a portion indicated as IV in Fig. 1 at a worn state. The tread 1 shown in the figure 1 is a half of a portion of the tread divided with respect to a center line C-C' extending in circumferential orientation.

The tread 1 is a tread for a tire having dimension 205/55R16 and comprises a contact face 2 intended to come into contact with the ground during rolling, and a plurality of grooves 3 of a depth D (shown in Fig. 2) opening to the contact face 2 and extending generally in circumferential orientation that is top-bottom orientation or in axial orientation that is left-right orientation in Fig. 1. The plurality of grooves 3 is delimiting a plurality of contact elements 4 in a form of a rib or a block. A top face 41 of each the plurality of contact elements 4 constitutes part of the contact face 2. Each the plurality of contact elements 4 is provided with at least one incision 5 opening to the top face 41 and extending radially inward of the contact elements 4.

In the grooves 3 of those extending in circumferential orientation, a tread wear indicator 8 is provided which indicates a legal wear limit of the tread 1. A height of the tread wear indicator 8 for a passenger car tire is normally 1.6 mm.

As shown in Fig. 2, the tread 1 comprising at least two rubber layers laminated in radial orientation of the tire, one rubber layer of the at least two rubber layers being composed of a rubber composition different from a rubber composition constituting adjacent rubber layer of the at least two rubber layers, the at least two rubber layers comprising a cap rubber layer 6 configuring the contact face 2 (and also the top face 41 of the contact elements 4) when the tread 1 being brand new and a base rubber layer 7 being provided radially inward of the cap rubber layer 6 which is not visible when the tread 1 being brand new. A carcass 10 which is a main body of the tire and a ply 9 are disposed radially inward of the tread 1, as typical construction of radial tire.

A rubber composition constituting the base rubber layer 7 comprises solid particles, and a rubber composition constituting the cap rubber layer 6 is devoid of the solid particles. In this embodiment, a size of the solid particles is in a range of 0.6 ~ 1.2 mm, an amount of the solid particle in the base rubber layer 7 is 8 volume %, and the solid particles are crumb rubber particles.

As shown in Fig. 3, when the tread 1 wears to a predetermined remaining tread depth D' that is between 1.5 mm smaller than the depth D of the groove 3 and a level of the tread wear indicator 8, the cap rubber layer 6 remains only partly, for example around the groove 3 or at a shoulder region of the tread 1. In such instance, the base rubber layer 7 becomes visible through the contact face 2 and constitutes unignorable part, for example more than or equal to 20% of a worn top face 41'. In the present embodiment, the tread 1 comprises two rubber layers, the cap rubber layer 6 and the base rubber layer 7 laminated in radial orientation of the tire.

As shown in Fig. 4 when the tread 1 being brand new, the contact element 4 is provided with 3 incisions 5 extending generally in axial orientation and substantially parallel one another. Each the incisions 5 is provided with a raised portion 51 provided which doesn't appear on the top face 41 of the contact element 4. The raised portion 51 is provided as to change a depth of the incision 5 inwardly from the top face 41 partly.

Each the plurality of contact elements 4 having an incision density DLN being defined as a sum of a projected length (µm) of the incision 5 on the top face 41 of each the contact elements 4 projected onto a plane parallel to a rotation axis of a tire and perpendicular to the top face 41 divided by an area (mm²) of the top face 41 without the incisions 5 when the tread 1 being brand new. In the present embodiment the incision density DLN is 111.876 µm/mm².

As shown in Fig. 5 when the tread 1 being worn to the predetermined remaining tread depth, the raised portion 51 (shown in Fig. 4) of the incision 5 becomes part of the worn top face 41', and because of this the incision length on the worn top face 41' would be shortened compared to that of the brand new state. At this level of wear, each the plurality of contact elements 4 having an incision density DLU being defined as a sum of a projected length (µm) of the incision 5 on the worn top face 41' of each the contact elements 4 projected onto a plane parallel to a rotation axis of a tire and perpendicular to the worn top face 41' divided by an area (mm²) of the worn top face 41' without the incisions 5, which is smaller than the incision density DLN and preferably at least 5% smaller than the incision density DLN, or on the other words, the incision density DLN is at least 5% greater than the incision density DLU. At this state, the cap rubber layer 6 remains only partly around an extremity of the contact element 4 or around the incision 5, and the base rubber layer 7 becomes visible and constitutes unignorable part, for example more than or equal to 20% of a worn top face 41'. In the present embodiment, the incision density DLU is 88.385 µm/mm², which is 27% lower than the incision density DLN (or the incision density DLN is 27% greater than the incision density DLU).

Since the incision density DLN when the tread 1 being new being greater than or equal to the incision density DLU when the tread 1 being worn to a predetermined remaining tread depth between 1.5 mm smaller than the depth D of the grooves 3 and a level above the tread wear indicator 8 and the incision density DLN is greater than the incision density DLU at a level of the tread wear indicator 8, it is possible to increase a stiffness of the contact element 4 after certain level of wear. Therefore it is possible to maintain satisfactory normal (or black) road performance until close to end of wear life. This increase of the stiffness of the contact element 4 by lowered incision density DLU would effectively express an advantageous effect of the solid particles for maintaining wintry (or white) road performance (to be explained later) until close to end of wear life.

Since the tread 1 comprising at least two rubber layers laminated in radial orientation of the tire and a rubber composition constituting the base rubber layer 7 comprises solid particles, and the cap rubber layer 6 is devoid of said solid particles, the solid particles would create roughness on the worn top face 41' of the contact element 4 by fall out and/or wear of the solid particles for trapping snow particles and/or for evacuating water film generated between ice covered ground and the contact element 4. Also at the same time such the roughness would increase edges in micro scale to be able to scrape snow and/or ice covered ground. Therefore it is possible to maintain satisfactory wintry (or white) road performance until close to end of wear life. Also since the particles comprised in the base rubber layer 7 are solid particles, the particles would not be crashed during mixing of the rubber composition and does not impact negatively the stiffness of the contact element 4. Therefore it is possible to maintain satisfactory normal (or black) road performance until close to end of wear life without decreasing productivity of the tread.

Since the base rubber layer 7 being visible on the worn top face 41' when the tread 1 being worn to the predetermined remaining tread depth on more than or equal to 20% area of the worn top face 41', it is possible to effectively use the roughness created on the worn top face 41' of the contact element 4 by fall out and/or wear of the solid particles for trapping snow particles and/or for evacuating water film generated between ice covered ground and the contact element 4. Also at the same time such the roughness would increase edges in micro scale to be able to scrape snow and/or ice covered ground. Therefore it is possible to maintain satisfactory wintry (or white) road performance until close to end of wear life.

Since the incision density DLN is at least 5% greater than the incision density DLU, it is possible to maintain satisfactory normal (or black) road performance from the beginning until close to end of wear life.

If the incision density DLN is greater than the incision density DLU but a gap between two incision densities is less than 5%, there is a risk that an initial normal (or black) road performance would not be satisfactory. The incision density DLN is preferably at least 7% greater than the incision density DLU, more preferably at least 10% greater than the incision density DLU and still more preferably at least 12% greater than the incision density DLU.

Since the predetermined remaining tread depth is between 70% of the depth D of the grooves 3 and the level of the tread wear indicator 8, it is possible to maintain satisfactory wintry (or white) road performance simultaneously with satisfactory normal (or black) road performance until close to end of wear life.

Since a size of the solid particles is from 0.1 mm to 2.0 mm, it is possible to maintain wintry (or white) road performance simultaneously with satisfactory normal (or black) road performance until close to end of wear life.

If this size of the solid particles is less than 0.1 mm, there is a risk that a roughness created via the solid particles is too small thus wintry (or white) road performance cannot be improved. If this size of the solid particles is more than 2.0 mm, there is a risk that a roughness created via the solid particles is too large thus normal (or black) road performance would be degraded.

This size of the solid particles is preferably from 0.1 mm to 1.8 mm, more preferably from 0.2 mm to 1.5 mm, still more preferably from 0.2 to 1.2 mm and particularly from 0.2 to 1.0 mm.

Since an amount of the solid particles in the base rubber layer 7 is from 3 to 40 volume %, it is possible to maintain wintry (or white) road performance simultaneously with satisfactory normal (or black) road performance until close to end of wear life.

If this amount of the solid particles in the base rubber layer 7 is less than 3 volume %, there is a risk that a roughness created after wear would be not enough thus wintry (or white) road performance cannot be improved. If this amount of the solid particles in the base rubber layer is more than 40 volume %, there is a risk that a roughness created after wear decreases too much contact area thus normal (or black) road performance would be degraded.

This amount of the solid particles in the base rubber layer 7 is preferably from 5 to 30 volume %, more preferably from 5 to 25 volume % and still more preferably from 8 to 20 volume %.

Since the solid particles are crumb rubber particles, it is possible to sustain the advantageous effect of solid particles longer as crumb rubber particles adhere with rubber composition constituting the base rubber layer 7 better than the other solid particles thus difficult to fall off, and eventhough crumb rubber particles wear faster than the rubber composition constituting the base rubber layer 7, crumb rubber particles wear gradually compared with the other solid particles. Thus it is possible to maintain wintry (or white) road performance simultaneously with satisfactory normal (or black) road performance until close to end of wear life.

A form of the grooves 3 may be straight, curved, waved or zig-zagged.

The incision 5 may have a form of straight, curved, waved, zig-zagged or combination of these forms, not only on the top face 41 or the worn top face 41' but also in radial orientation.

The incision 5 may open to the groove 3 on two sides as shown in Fig. 4, may open to the groove 3 on only one side, constantly or alternately, or may not open to the groove 3.

The invention is not limited to the examples described and represented and various modifications can be made there without leaving its framework.

### [Examples]

In order to confirm the effect of the present invention, one type of tire of Example to which the present invention is applied and other type of block tire of Reference were prepared.

The Example was a tire as described in the above embodiment; a tread of the Example comprised two rubber layers, a cap rubber layer which was devoid of solid particles and a base rubber layer which included 8 volume % of crumb rubber particles as solid particles of a size in a range of 0.6 ~ 1.2 mm. An incision density DLN at a brand new state was 111.876 µm/mm². The tire was worn out to a remaining tread depth of 2.0 mm (worn test tires), and at this state the base rubber layer was visible on more than or equal to 20% area of a (worn) top face and an incision density DLU was 88.385 µm/mm². The Reference was a tire having the same construction as the Example but without solid particles in the base rubber layer. All the Example and Reference were made of the same rubber material except that of constituting the base rubber layer.

### Wintry road performance tests:

Worn test tires (remaining tread depth = 2.0 mm) were mounted onto all four wheels of a 1,400 cc front-wheel drive vehicle. On a straight path compacted snow surface, braking with ABS (Anti-lock Braking System) was applied at a speed of 50 km/h, distance until 5 km/h was measured.

The results are shown in table. In this table 1, results are represented by an index of 100 for Reference, higher the number indicates better the performance.

Normal road performance tests:
Worn test tires (remaining tread depth = 2.0 mm) were mounted onto all four wheels of a 1,400 cc front-wheel drive vehicle. On a straight path 1.0 mm deep wet surface, braking with ABS (Anti-lock Braking System) was applied at a speed of 80 km/h, distance until 20 km/h was measured.

The results are also shown in table 1. In this table 1, results are represented by an index of 100 for Reference, higher the number indicates better the performance.

**[Table 1]**

| | Reference | Example |
|---|---|---|
| Wintry road performance (Index) | 100 | 117 |
| Normal road performance (Index) | 100 | 103 |

As seen from table 1, the Example shows improvement on wintry (or white) road performance while maintaining satisfactory on normal (or black) road performance even close to end of wear life.

### [Reference Signs List]

- 1: tread
- 2: contact face
- 3: groove
- 4: contact element
- 41: top face
- 41': worn top face
- 5: incision
- 51: raised portion of incision
- 6: cap rubber layer
- 7: base rubber layer
- 8: tread wear indicator
- 9: ply
- 10: carcass

## Claims

1. A tread (1) for a tire having a contact face (2) intended to come into contact with ground during rolling, the tread (1) being provided with a plurality of grooves (3) of a depth D opening to the contact face (2) and a plurality of contact elements (4) being delimited by the plurality of grooves (3), each the plurality of contact elements (4) having a top face (41) constituting a part of the contact face (2) and at least one incision (5) opening to the top face (41) and extending radially inward of the contact elements (4), each the plurality of contact elements (4) having an incision density DLN being defined as a sum of a projected length (µm) of the incision (5) on the top face (41) of each the contact elements (4) projected onto a plane parallel to a rotation axis of a tire and perpendicular to the top face (41) divided by an area (mm²) of the top face (41) (µm/mm²) without the incision (5) when the tread being new, and an incision density DLU being defined as a sum of a projected length (µm) of the incision (5) on a worn top face (41') of each the contact elements (4) projected onto a plane parallel to a rotation axis of a tire and perpendicular to the top face (41) divided by an area (mm²) of the worn top face (41') (µm/mm²) without the incision (5) when the tread being worn to a predetermined remaining tread depth between 1.5 mm smaller than the depth D of the grooves (3) and a level above a tread wear indicator (8), the incision density DLN being greater than or equal to the incision density DLU at the predetermined remaining tread depth, and the incision density DLN being greater than the incision density DLU at a level of the tread wear indicator (8), the tread (1) comprising at least two rubber layers laminated in radial orientation of the tire, one rubber layer of the at least two rubber layers being composed of a rubber composition different from a rubber composition constituting adjacent rubber layer of the at least two rubber layers, the at least two rubber layers comprising a cap rubber layer (6) configuring the contact face (2) when the tread being new and a base rubber layer (7) being provided radially inward of the cap rubber layer (6), the base rubber layer (7) being visible on the worn top face (41') when the tread being worn to the predetermined remaining tread depth on more than or equal to 20% area of the worn top face (41'), the tread being **characterized in that** a rubber composition constituting the base rubber layer (7) comprises solid particles which contain no hollow nor void inside, and **in that** the cap rubber layer (6) is devoid of said solid particles, wherein the solid particles are crumb rubber particles, particles obtained by reducing scrap tire(s) or other rubber(s) into granules with reinforcing materials removed along with any other contaminants.

2. The tread (1) according to claim 1, wherein the tread (1) comprises two rubber layers, the cap rubber layer (6) and the base rubber layer (7) laminated in radial orientation of the tire.

3. The tread (1) according to claim 1 or claim 2, wherein the incision density DLN is at least 5% greater than the incision density DLU.

4. The tread (1) according to any one of the claims 1 to 3, wherein the predetermined remaining tread depth is between 70% of the depth D of the grooves (3) and the level of the tread wear indicator (8), and wherein the incision density DLN is greater than the incision density DLU at the predetermined remaining tread depth.

5. The tread (1) according to any one of the claims 1 to 4, wherein a size of the solid particles is from 0.1 mm to 2.0 mm.

6. The tread (1) according to any one of the claims 1 to 5, wherein an amount of the solid particles in the base rubber layer (7) is from 3 to 40 volume %.

7. A tire having a tread according to any one of the claims 1 to 6.

## Patentansprüche

1. Lauffläche (1) für einen Reifen mit einer Kontaktfläche (2), die dazu bestimmt ist, während des Abrollens mit dem Boden in Kontakt zu kommen, wobei die Lauffläche (1) mit einer Vielzahl von Rillen (3) einer Tiefe D, die sich zur Kontaktfläche (2) hin öffnen, und einer Vielzahl von Kontaktelementen (4) versehen ist, die durch die Vielzahl von Rillen (3) begrenzt sind, wobei jedes der mehreren Kontaktelemente (4) eine Oberseite (41), die einen Teil der Kontaktfläche (2) bildet, und mindestens einen Einschnitt (5) aufweist, der sich zur Oberseite (41) hin öffnet und sich radial nach innen von den Kontaktelementen (4) erstreckt, wobei jedes der Vielzahl von Kontaktelementen (4) eine Einschnittdichte DLN aufweist, die definiert ist als eine Summe einer projizierten Länge (µm) des Einschnitts (5) auf der Oberseite (41) jedes der Kontaktelemente (4), projiziert auf eine Ebene parallel zu einer Drehachse eines Reifens und senkrecht zu der Oberseite (41), dividiert durch eine Fläche (mm2) der Oberseite (41) (µm/mm2) ohne den Einschnitt (5), wenn die Lauffläche neu ist, und eine Einschnittdichte DLU, die definiert ist als eine Summe einer projizierten Länge (µm) des Einschnitts (5) auf einer abgenutzten Oberseite (41') jedes der Kontaktelemente (4), projiziert auf eine Ebene parallel zu einer Drehachse eines Reifens und senkrecht zu der Oberseite (41), dividiert durch eine Fläche (mm2) der abgenutzten Oberseite (41') (µm/mm2) ohne den Einschnitt (5), wenn die Lauffläche auf eine vorbestimmte Restprofiltiefe zwischen 1. 5 mm kleiner als die Tiefe D der Rillen (3) und einem Niveau oberhalb eines Laufflächenabnutzungsanzeigers (8) abgenutzt ist, wobei die Einschnittdichte DLN größer oder gleich der Einschnittdichte DLU bei der vorbestimmten Restprofiltiefe ist und die Einschnittdichte DLN größer als die Einschnittdichte DLU bei einem Niveau des Laufflächenabnutzungsanzeigers (8) ist, wobei die Lauffläche (1) mindestens zwei Gummischichten umfasst, die in radialer Ausrichtung des Reifens laminiert sind, eine Gummischicht der mindestens zwei Gummischichten aus einer Gummizusammensetzung besteht, die sich von einer Gummizusammensetzung unterscheidet, die eine angrenzende Gummischicht der mindestens zwei Gummischichten bildet, wobei die mindestens zwei Gummischichten eine Deckgummischicht (6), die die Kontaktfläche (2) bildet, wenn die Lauffläche neu ist, und eine Basisgummischicht (7), die radial innerhalb der Deckgummischicht (6) vorgesehen ist, umfassen, die Basisgummischicht (7) auf der abgenutzten Oberseite (41') sichtbar ist, wenn die Lauffläche bis zu der vorbestimmten Restprofiltiefe auf mehr als oder gleich 20% der abgenutzten Oberseite (41') abgenutzt ist, wobei die Lauffläche **dadurch gekennzeichnet ist, dass** eine Gummizusammensetzung, die die Basisgummischicht (7) bildet, feste Teilchen umfasst, die im Inneren weder Hohlräume noch Leerräume enthalten, und dass die Deckgummischicht (6) frei von diesen festen Teilchen ist, wobei die festen Teilchen Krümelgummiteilchen sind, Teilchen, die durch Zerkleinerung von Altreifen oder anderem Gummi zu Granulat erhalten werden, wobei Verstärkungsmaterialien und andere Verunreinigungen entfernt werden.

2. Die Lauffläche (1) nach Anspruch 1, wobei die Lauffläche (1) zwei Gummischichten umfasst, die Deckgummischicht (6) und die Basisgummischicht (7), die in radialer Ausrichtung des Reifens laminiert sind.

3. Lauffläche (1) nach Anspruch 1 oder Anspruch 2, wobei die Einschnittdichte DLN mindestens 5% größer ist als die Einschnittdichte DLU.

4. Lauffläche (1) nach einem der Ansprüche 1 bis 3, wobei die vorgegebene Restprofiltiefe zwischen 70% der Tiefe D der Rillen (3) und dem Niveau des Laufflächenabnutzungsanzeigers (8) liegt und wobei die Einschnittdichte DLN größer ist als die Einschnittdichte DLU bei der vorgegebenen Restprofiltiefe.

5. Die Lauffläche (1) nach einem der Ansprüche 1 bis 4, wobei die Größe der festen Teilchen zwischen 0,1 mm und 2,0 mm liegt.

6. Lauffläche (1) nach einem der Ansprüche 1 bis 5, wobei der Anteil der festen Teilchen in der Basisgummischicht (7) 3 bis 40 Volumenprozent beträgt.

7. Ein Reifen mit einer Lauffläche nach einem der Ansprüche 1 bis 6.

## Revendications

1. Bande de roulement (1) pour un pneumatique ayant une face de contact (2) destinée à entrer en contact avec le sol pendant le roulage, la bande de roulement (1) étant pourvue d'une pluralité de rainures (3) d'une profondeur D s'ouvrant sur la face de contact (2) et d'une pluralité d'éléments de contact (4) étant délimités par la pluralité de rainures (3), chacun de la pluralité d'éléments de contact (4) ayant une face supérieure (41) constituant une partie de la face de contact (2) et au moins une incision (5) s'ouvrant sur la face supérieure (41) et s'étendant radialement vers l'intérieur des éléments de contact (4), chaque élément de la pluralité d'éléments de contact (4) ayant une densité d'incision DLN définie comme la somme d'une longueur projetée (µm) de l'incision (5) sur la face supérieure (41) de chaque élément de contact (4) projetée sur un plan parallèle à un axe de rotation d'un pneu et perpendiculaire à la face supérieure (41) divisée par une surface (mm2) de la face supérieure (41) (µm/mm2) sans l'incision (5) lorsque la bande de roulement est neuve, et une densité d'incision DLU étant définie comme une somme d'une longueur projetée (µm) de l'incision (5) sur une face supérieure usée (41') de chacun des éléments de contact (4) projetée sur un plan parallèle à un axe de rotation d'un pneu et perpendiculaire à la face supérieure (41) divisée par une zone (mm2) de la face supérieure usée (41') (µm/mm2) sans l'incision (5) lorsque la bande de roulement est usée à une profondeur de bande de roulement restante prédéterminée entre 1. 5 mm plus petite que la profondeur D des rainures (3) et un niveau au-dessus d'un indicateur d'usure de bande de roulement (8), la densité d'incision DLN étant supérieure ou égale à la densité d'incision DLU à la profondeur de bande de roulement restante prédéterminée, et la densité d'incision DLN étant supérieure à la densité d'incision DLU à un niveau de l'indicateur d'usure de bande de roulement (8), la bande de roulement (1) comprenant au moins deux couches de caoutchouc laminées dans l'orientation radiale du pneu, une couche de caoutchouc des au moins deux couches de caoutchouc étant composée d'une composition de caoutchouc différente d'une composition de caoutchouc constituant la couche de caoutchouc adjacente des au moins deux couches de caoutchouc, les au moins deux couches de caoutchouc comprenant une couche de caoutchouc de recouvrement (6) configurant la face de contact (2) lorsque la bande de roulement est neuve et une couche de caoutchouc de base (7) étant prévue radialement à l'intérieur de la couche de caoutchouc de recouvrement (6), la couche de caoutchouc de base (7) étant visible sur la face supérieure usée (41') lorsque la bande de roulement est usée jusqu'à la profondeur de bande de roulement restante prédéterminée sur une surface supérieure ou égale à 20 % de la face supérieure usée (41'), la bande de roulement étant **caractérisée en ce qu'**une composition de caoutchouc constituant la couche de caoutchouc de base (7) comprend des particules solides qui ne contiennent pas de creux ni de vide à l'intérieur, et **en ce que** la couche de caoutchouc de recouvrement (6) est dépourvue desdites particules solides, dans laquelle les particules solides sont des particules de caoutchouc de miettes, des particules obtenues en réduisant un ou plusieurs pneus usagés ou un ou plusieurs autres caoutchoucs en granules avec des matériaux de renforcement retirés ainsi que tout autre contaminant.

2. Bande de roulement (1) selon la revendication 1, dans laquelle la bande de roulement (1) comprend deux couches de caoutchouc, la couche de caoutchouc de recouvrement (6) et la couche de caoutchouc de base (7) laminées dans l'orientation radiale du pneu.

3. Bande de roulement (1) selon la revendication 1 ou la revendication 2, dans laquelle la densité d'incision DLN est au moins 5% supérieure à la densité d'incision DLU.

4. Bande de roulement (1) selon l'une quelconque des revendications 1 à 3, dans laquelle la profondeur de bande de roulement restante prédéterminée est comprise entre 70% de la profondeur D des rainures (3) et le niveau de l'indicateur d'usure de bande de roulement (8), et dans laquelle la densité d'incision DLN est supérieure à la densité d'incision DLU à la profondeur de bande de roulement restante prédéterminée.

5. La bande de roulement (1) selon l'une quelconque des revendications 1 à 4, dans laquelle une taille des particules solides est de 0,1 mm à 2,0 mm.

6. La bande de roulement (1) selon l'une quelconque des revendications 1 à 5, dans laquelle une quantité des particules solides dans la couche de caoutchouc de base (7) est de 3 à 40 % en volume.

7. Pneu ayant une bande de roulement selon l'une quelconque des revendications 1 à 6.
